(19)

**Europäisches Patentamt**
**European Patent Office**
**Office européen des brevets**

(11) **EP 4 787 337 A1**

(12) **EUROPEAN PATENT APPLICATION**

(43) Date of publication:
**05.08.2026  Bulletin 2026/32**

(21) Application number: **25382064.1**

(22) Date of filing: **31.01.2025**

(51) International Patent Classification (IPC):
*G06V 10/82* $^{(2022.01)}$     *G06T 7/00* $^{(2017.01)}$

(52) Cooperative Patent Classification (CPC):
**G06V 10/82; G06T 7/0012;** G06T 2207/10081;
G06T 2207/20081; G06T 2207/20084;
G06T 2207/30096; G06V 2201/03

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Fundación del Sector Público Estatal Centro Nacional de Investigaciones Oncológicas Carlos III**
**(F.S.P. CNIO)**
**28029 Madrid (ES)**
• **Fundació Hospital Universitari Vall d'Hebron - Institut de Recerca**
**08035 Barcelona (ES)**

• **Erasmus University Rotterdam Medical Center**
**3015 GE Rotterdam (NL)**

(72) Inventors:
• **XUE, Nannan**
**28029 Madrid (ES)**
• **SABROSO-LASA, Sergio**
**28029 Madrid (ES)**
• **MERINO CASABIEL, Javier Eugenio**
**08035 Barcelona (ES)**
• **VAN EIJCK, Casper Henricus Johanes**
**3015 GE Rotterdam (NL)**
• **MALATS, Núria**
**28029 Madrid (ES)**

(74) Representative: **Clarke, Modet y Cía., S.L.**
**C/ Suero de Quiñones 34-36**
**28002 Madrid (ES)**

(54) **METHOD AND SYSTEM FOR DETECTING PANCREATIC CANCER METASTASIS**

(57)     Method and system for detecting pancreatic cancer metastasis. The method (100) comprises:
- receiving (102) abdominal CT scan images (4);
- obtaining (104) segmented images (5) with segmented pancreas (6) and segmented pancreatic tumor (7);
- selecting (106) segmented images (8) based on the area of the segmented pancreatic tumor (7);
- cropping (108) each selected segmented image (8);
- obtaining (110) rotated segmented images (12);
- for each rotated segmented image (12), composing (112) a dual-channel image (15) including the rotated segmented image (12) and its corresponding non-segmented image (16);
- extracting (114) feature vectors (22) of different sizes;
- fusing (116) the feature vectors (22) with a deep learning-based fusion module (24), obtaining fusion features (25);
- predicting (118) the presence of metastasis in each dual-channel image (15) using automatic classification of the fusion features (25); and
- predicting (120) the presence of metastasis in the patient (1) using the metastasis prediction (28) of each dual-channel image (15).
The method (100) is robust and accurately predicts extra-pancreatic organ metastasis.

FIG. 1

EP 4 787 337 A1

## Description

### FIELD

The present invention is comprised within the field of methods and systems for detecting metastasis in patients with pancreatic cancer.

### BACKGROUND

The detection of metastasis in pancreatic ductal adenocarcinoma (PDAC) is a crucial factor in managing and treating patients suffering from this disease. Regrettably, the majority of patients (52%) are diagnosed with metastatic disease at the time of diagnosis according to the Surveillance, Epidemiology, and End Results Program (SEER) Cancer Stat Facts, rendering surgical resection unfeasible. The prognosis for those patients is extremely poor, with a mere 2% five-year survival rate. Despite advancements in diagnostic modalities, accurately ascertaining the metastatic status of PDAC remains a challenge.

Firstly, metastatic patients often experience delayed and imprecise diagnoses due to the inconspicuous symptoms and the extreme aggressiveness of the disease. Secondly, when patients present organ metastasis outside the abdomen, traditional abdominal radiology imaging may fail to provide comprehensive information, thus resulting it difficult to identify all metastases sites. Position emission tomography/computed tomography (PET/CT) can detect all distant metastases sites that cannot be identified by traditional techniques, but it is not recommended as a standard examination due to its high economic cost. Thirdly, once patients present radiographic signs of metastatic disease, the following diagnostic process relies heavily on a combination of radiological imaging, biopsy and pathological assessment, in addition to other clinical tools and biomarkers (i.e., CA19-9). This diagnostic process is characterized by being labour-intensive with a significant financial cost.

Therefore, there exists a pressing need to develop novel, non-invasive and inexpensive tools to guide clinical decision-making for metastasis in PDAC patients. Contrast-enhanced computed tomography scan (CE-CT) is currently the primary diagnostic test for pancreatic cancer diagnosis. CE-CT scans usually assess the tumor's size, location, density, and blood supply. It can also determine the tumor local invasion and assesses its resectability potential.

Advances in Deep Learning (DL), specifically convolutional neural networks (CNN), have exhibited robust and scalable performance in medical imaging analyses, outperforming other machine learning algorithms and expecting to revolutionize the current medical practice. In recent years, there has been a significant increase of DL-techniques applied to CT image in PDAC patients in both the diagnosis and the prognosis fields. In terms of PDAC staging, DL-techniques for lymph node metastasis prediction have been proposed ([1]-[4]). Previous studies have implemented CT radiomics to predict lymph-node metastasis in PDAC patients by building high-performance algorithms ([1], [7]-[9]). Machine learning models based on CE-CT radiomics for the prediction of occult liver metastases have been proposed ([5]-[6]). However, robust and comprehensive prediction models for organ metastasis are still scarce. Most PDAC patients present with liver metastasis at first diagnosis, resulting in a poor prognosis. To predict the presence of liver metastasis, [6] uses liver radiomics of preoperative CE-CT scans to develop a machine-learning model with an AUC=0.76. Similarly, [5] also reported a radiomics model based on CE-CT achieving AUCs between 0.71-0.73 in predicting liver metastases.

However, no exhaustive and robust DL-algorithm is available to support the prediction of organ metastasis, both local and distant, with a higher accuracy.

<u>References</u>

[1] An, C., et al. Deep learning radiomics of dual-energy computed tomography for predicting lymph node metastases of pancreatic ductal adenocarcinoma. Eur J Nucl Med Mol Imaging 49, 1187-1199 (2022).

[2] Bian, Y., et al. Artificial Intelligence to Predict Lymph Node Metastasis at CT in Pancreatic Ductal Adenocarcinoma. Radiology 306, 160-169 (2023).

[3] Fu, N., et al. A deep-learning radiomics-based lymph node metastasis predictive model for pancreatic cancer: a diagnostic study. Int J Surg 109, 2196-2203 (2023).

[4] Chen, X., Wang, W., Jiang, Y. & Qian, X. A dual-transformation with contrastive learning framework for lymph node metastasis prediction in pancreatic cancer. Med Image Anal 85, 102753 (2023).

[5] Zhao, B., et al. Development of a radiomics-based model to predict occult liver metastases of pancreatic ductal adenocarcinoma: a multicenter study. Int J Surg 110, 740-749 (2024).

[6] Zambirinis, C.P., et al. Recurrence After Resection of Pancreatic Cancer: Can Radiomics Predict Patients at Greatest Risk of Liver Metastasis? Annals of surgical oncology 29, 4962-4974 (2022).

[7] Liang, X., et al. A radiomics model that predicts lymph node status in pancreatic cancer to guide clinical decision making: A retrospective study. J Cancer 12, 6050-6057 (2021).

[8] Li, K., et al. Contrast-enhanced CT radiomics for predicting lymph node metastasis in pancreatic ductal adenocarcinoma: a pilot study. Cancer Imaging 20, 12 (2020).

[9] Bian, Y., et al. Radiomics nomogram for the preoperative prediction of lymph node metastasis in pancreatic ductal adenocarcinoma. Cancer Imaging 22, 4 (2022).

[10] Isensee, F., Jaeger, P.F., Kohl, S.A.A., Petersen, J. & Maier-Hein, K.H. nnU-Net: a self-configuring method for deep learning-based biomedical image segmentation. Nat Methods 18, 203-211 (2021).

[11] He, K., Zhang, X., Ren, S. & Sun, J. Deep Residual Learning for Image Recognition. 2016 IEEE Conference on Computer Vision and Pattern Recognition (CVPR), 770-778 (2015).

[12] Liu, K., Lu, N., Wu, F., Zhang, R. & Gao, F. Model Fusion and Multiscale Feature Learning for Fault Diagnosis of Industrial Processes. IEEE transactions on cybernetics Pp(2022).

[13] Liu, B., Chen, C.H., Zheng, P. & Zhang, G. An Adaptive Parallel Feature Learning and Hybrid Feature Fusion-Based Deep Learning Approach for Machining Condition Monitoring. IEEE transactions on cybernetics Pp(2022).

## SUMMARY

The present invention refers to a method and system of detecting pancreatic cancer metastasis that solves the aforementioned problems.

The method is robust and accurately predicts extra-pancreatic organ metastasis. The method comprises the following steps:

- Receiving a plurality of images of an abdominal CT scan of a patient, wherein each image includes at least a region of a pancreas and a region of a pancreatic tumor.

- Obtaining, from each CT image received, a segmented image or a mask that includes a segmented pancreas and a segmented pancreatic tumor.

- Selecting at least one segmented image based on the area of the segmented pancreatic tumor.

- Cropping each selected segmented image.

- Obtaining, from each cropped segmented image, at least one rotated segmented image.

- For each rotated segmented image, composing a dual-channel image that includes the rotated segmented image and its corresponding non-segmented image.

- Extracting from each dual-channel image a plurality of feature vectors of different sizes using a feature extractor module.

- Fusing the feature vectors of each dual-channel image using a deep learning-based fusion module to obtain fusion features.

- Predicting the presence of extra-pancreatic organ metastasis in each dual-channel image using an automatic classification of the fusion features.

- Predicting the presence of extra-pancreatic organ metastasis in the patient using the metastasis prediction of each dual-channel image.

Another aspect of the present invention refers to a system for detecting pancreatic cancer metastasis. The system comprises a data processing unit configured to execute the steps of the method. The invention also refers to a computer program product for detecting pancreatic cancer metastasis, comprising computer code instructions that, when executed by a processor, causes the processor to perform the method. The computer program product may comprise at least one computer-readable storage medium having recorded thereon the computer code instructions.

The method of the present invention is a deep-learning algorithm for PDAC metastasis prediction that fuses abdominal CE-CT individual depth features from a novel architecture, reaching highly accurate prediction to identify presence/absence of PDAC organ metastases. Furthermore, the performance of the method remains similar regardless of the metastasis location. According to an extensive set of tests performed, primary tumor size and location, patient sex and age, and CT manufacturer does not affect the prediction ability of the method.

In comparison to the previous studies of prior art, the present invention not only achieves a higher accuracy in detecting liver metastasis, but it also reaches excellent prediction performance for other metastasis sites.

In conclusion, the invention presents a deep learning-based fusion model that utilizes venous CE-CT images of a primary pancreatic tumor to predict with high accuracy (AUC>0.80) the presence of clinical extra-pancreatic organ metastasis in PDAC patients. Remarkably, the performance of the method remains robust when stratified by different metastatic locations. The invention may help surgeons and oncologists to improve the management of PDAC patient care by guiding treatment decisions related to surgical intervention and chemotherapy.

## BRIEF DESCRIPTION OF THE DRAWINGS

A series of drawings which aid in better understanding the invention and which are expressly related with an embodiment of said invention, presented as a non-limiting example thereof, are very briefly described below.

Figure 1 shows a flow diagram of a method of detecting pancreatic cancer metastasis according to the present invention.

Figure 2A shows a patient with pancreatic cancer. Figures 2B-2J represent the different steps of the method according to an exemplary embodiment.

Figure 3 depicts an embodiment of the feature extractor module, the fusion module and the first classifier module.

Figures 4A-4C show the performance of the method for binary classification of presence/absence of metastases at patient-level applied to a test dataset.

Figures 5A-5B show the performance of the method based on different metastatic sites using the test dataset.

Figure 6 depicts an exemplary embodiment of a system for detecting pancreatic cancer metastasis.

## DETAILED DESCRIPTION

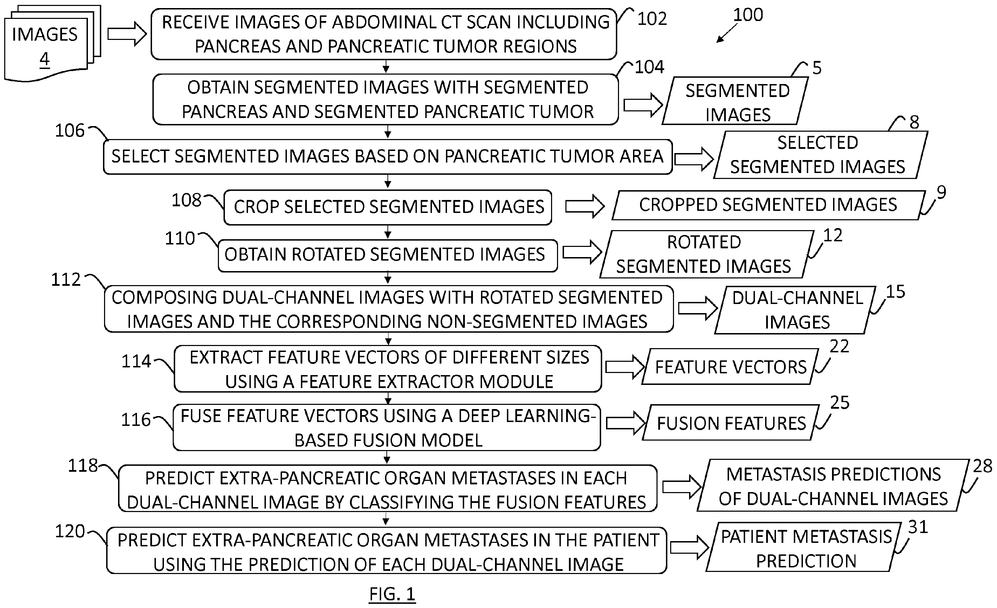

**Figure 1** depicts a flow diagram of a method 100 of detecting pancreatic cancer metastasis according to an embodiment of the present invention.

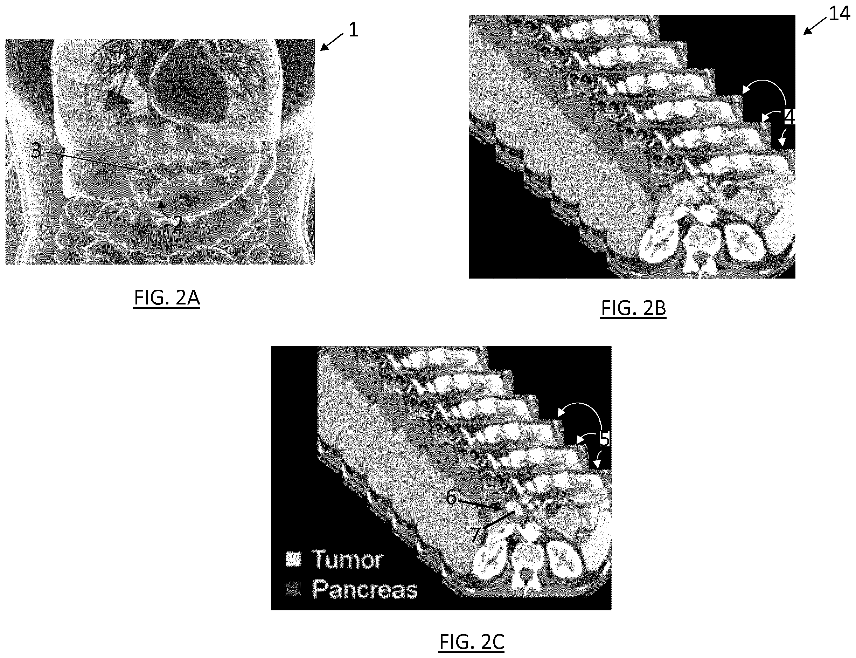

The method 100 comprises the first step of receiving 102 a plurality of images 4 of an abdominal computed tomography (CT) scan of a patient. **Figure 2A** shows the pancreas 2 of a patient 1 having a pancreatic tumor 3. In this example, the arrows represent that the pancreatic tumor 3 is malignant and the pancreatic cancer has spread out of the pancreas 2 to other organs. **Figure 2B** depicts the plurality of images 4 of an abdominal CT scan 14 of the patient 1. Each image 4, which corresponds to a different slice of the CT scan, includes a region of the pancreas 2 and a region of the pancreatic tumor 3. In an embodiment, the abdominal CT scan 14 is a portal venous phase CE-CT scan (the images 4 are therefore CE-CT images).

The method 100 further comprises obtaining 104, from each image 4 received, a segmented image 5 that includes a differentiated segmentation of the pancreas 2 and the pancreatic tumor 3, wherein the pixels of the segmented pancreas and the pixels of the segmented pancreatic tumor are assigned different values: the pixels not belonging to either the pancreas or the tumor are assigned a first value $V_1$, the pixels belonging to the pancreas are assigned a second value $V_2$ and the pixels belonging to the tumor are assigned a third value $V_3$, with $V_1 \neq V_2 \neq V_3$; in an embodiment, $V_1 < V_2 < V_3$ and $V_1$ is preferably 0. **Figure 2C** depicts the segmented image 5 with the segmented pancreas 6 and the segmented pancreatic tumor 7. Both segmented regions (6,7) are differentiated (e.g. with different colors or grey tones in the segmented image 5). Although not depicted in the segmented image 5 of Figure 2C, the areas of the segmented images 5 outside the segmented pancreas 6 and segmented pancreatic tumor 7 would normally be represented in black color. Different automatic segmentation models may be employed for segmenting the pancreas and the pancreatic cancer, such as the nnUnet [10], a self-configuring method for deep learning-based biomedical image segmentation. Alternatively, a manual segmentation approach may be used instead, when masks obtained from the automatic segmentation of PDAC are not clinically applicable.

In an embodiment, for the segmentation the area that includes the tumor and the pancreas is firstly segmented using a first color; then, the tumor is detected in this first segmentation image and segmented with another color, thus obtaining the segmented pancreatic tumor 7 represented with a second color. The pixels of segmented images 5 are assigned one of three possible values, a different value depending on the type of tissue, wherein the assigned value represents a different level of attention:

- A first value (e.g. "0", no attention) for non-pancreatic tissue (normally represented in black).

- A second value (e.g. "1", low attention) for pancreatic tissue (segmented pancreas 6, represented for instance in red).

- A third value (e.g. "2", high attention) for pancreatic tumor tissue (segmented pancreatic tumor 7, represented for instance in yellow).

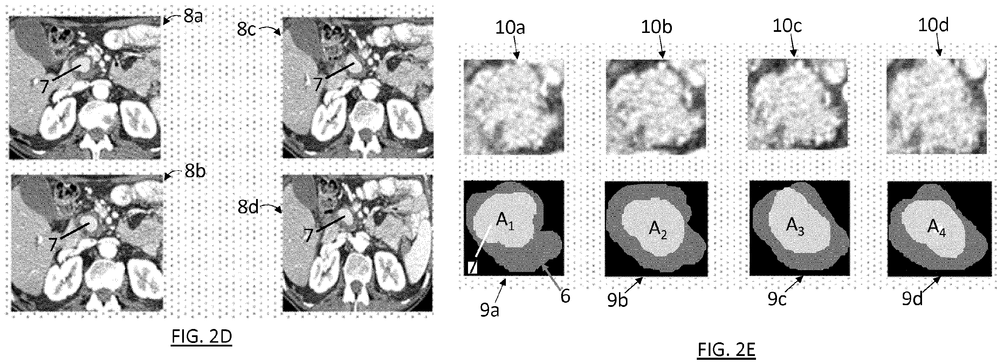

Next, at least one segmented image 8 is selected 106 based on the area of the segmented pancreatic tumor 7. In an embodiment, a plurality of segmented images 8 having the largest area of segmented pancreatic tumor 7 are selected. In a preferred embodiment, depicted in **Figure 2D,** the top four segmented images (8a,8b,8c,8d) by tumor area are selected, although a different number may be selected (e.g. the top one, the top two, the top three, etc.). $A_1$, $A_2$, $A_3$ and $A_4$ represent, respectively, the area of the segmented pancreatic tumor 7 of the segmented images 8a, 8b, 8c and 8d. The area may be calculated in terms of number of pixels within the segmented pancreatic tumor 7. In this example the areas $A_1$, $A_2$, $A_3$ and $A_4$ are the largest ones in the set of segmented images 5.

The selected segmented images 8 are then cropped 108. As shown in the embodiment of **Figure 2E,** both the original CT images (non-segmented images, upper row) and the segmented images (lower row) are cropped. According to the embodiment shown in Figure 2E, the selected segmented images (8a,8b,8c,8d) are cropped 108 around the segmented pancreas 6, preferably into square subregions, the cropped segmented images 9 including at least a bounding box of the segmented pancreas 6. The cropped segmented images (9a,9b,9c,9d) depicted in the lower row of Figure 2E show three levels of segmentation: a first level (e.g. red) for the segmented pancreas 6, a second level (e.g. yellow) for the segmented pancreatic tumor 7, and a third level (e.g. black) for the areas outside both the segmented pancreas 6 and the segmented pancreatic tumor 7. The images in the upper row of Figure 2E are the corresponding non-segmented images (10a,10b,10c,10d), that is, the original pixel values in the same cropped area of the corresponding images 4 of the CT scan 14.

The method 100 additionally comprises the step of obtaining 110, from each cropped segmented image 9, at least one rotated segmented image 12 by applying rotating geometric transformations to the cropped segmented image 9. These rotating geometric transformations are data augmentation techniques used to generate additional patches of images.

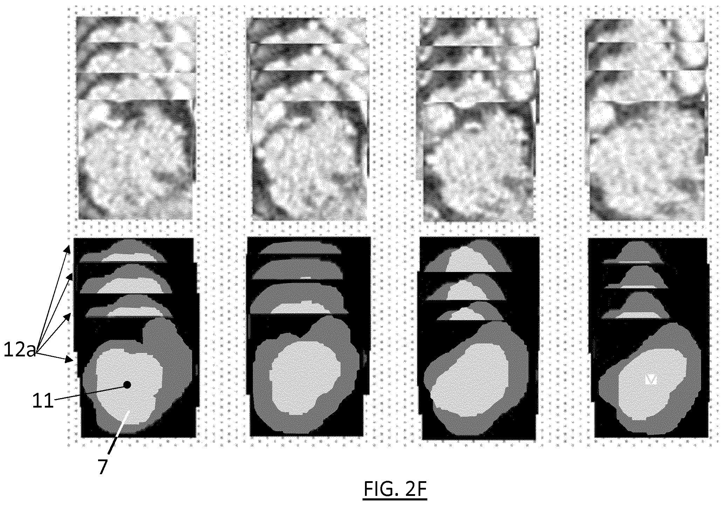

Applying the rotating geometric transformations to obtain larger patches of images is optional. If the rotating geometric transformations are not applied, a single rotated segmented image 12 is obtained (the image being rotated 0° or 360°). Otherwise, a plurality of rotated segmented images 12 are obtained. In the embodiment shown in **Figure 2F,** the cropped segmented images (9a,9b,9c,9d) are rotated around the geometric center 11 of the segmented pancreatic tumor 7. In this example four rotated segmented images (12a,12b,12c,12d), in steps of 90°, are obtained for each corresponding cropped segmented image 9, although a different number of rotated segmented images 12 may be obtained. In a preferred embodiment, six rotated images are obtained in steps of 60°.

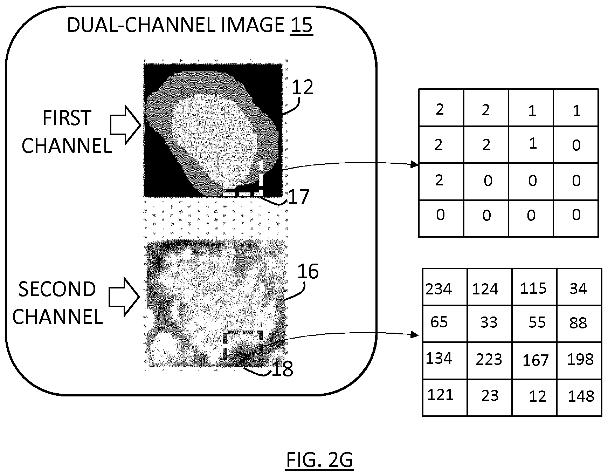

The method 100 also comprises composing 112, for each rotated segmented image 12, a dual-channel image that includes in a first channel the rotated segmented image 12 and in a second channel its corresponding non-segmented image. **Figure 2G** shows an exemplary dual-channel image 15 generated for a particular rotated segmented image 12, the dual-channel image 15 comprising said rotated segmented image 12 and its corresponding non-segmented image 16 (that is, the original pixel values in the same rotated area of the corresponding image 4 of the CT scan 14). The zoomed region 17 of the rotated segmented image 12 includes pixels of non-pancreatic tissue (assigned a first value "0", see upper right table), pixels of pancreatic tissue (assigned a second value "1") and pixels of for pancreatic tumor tissue (assigned a third value "2"). Similarly, the pixels in the corresponding zoomed region 18 of the non-segmented image 16 have different values (see lower right table), depending on their intensities.

The advantage of using dual-channel images 15 is that it allows the model to correctly pay more attention to the important areas. The attention given by the dual-channel image 15 to the non-pancreatic tissue area is 0 (no attention). The attention to the pancreas is 1 (middle level of attention) and the attention of the tumor is 2 (highest level attention). By providing scaling-like attention images, the model can make more accurate and efficient predictions. Not only tumor and pancreas information are highlighted, but also surrounding information. For metastasis prediction, a significant improvement is achieved when considering the dual-channel image 15.

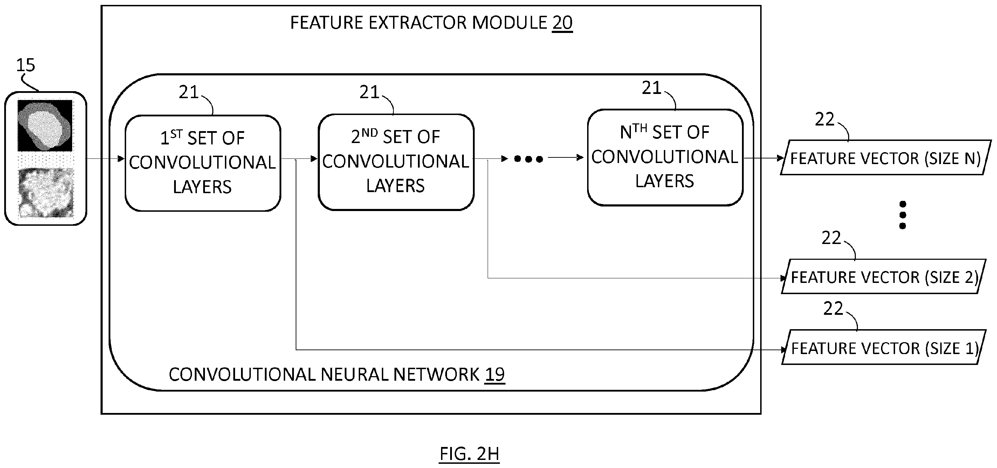

As shown in **Figure 2H,** each dual-channel image 15 is input to a feature extractor module 20. Therefore, not only tumor and pancreas information highlighted but also surrounding information is provided in the cropped images to the feature extractor module 20. In an embodiment, the feature extractor module 20 comprises a convolutional neural network 19 having a plurality of sets of convolutional layers 21 connected in series. Each set of convolutional layers 21 includes one or more convolutional layers and is configured to extract feature vectors 22 with a particular size. The feature extractor module 20 extracts 114 from each dual-channel image 15 a plurality of feature vectors 22 of different sizes. In the example depicted in Figure 2H, the convolutional neural network 19 comprises N sets of convolutional layers 21 (1st set of convolutional layers, 2nd set of convolutional layers,..., Nth set of convolutional layers), wherein each set of convolutional layers 21 extracts a feature vector 22 with a particular size (size 1, size 2,..., size N), the sizes being different.

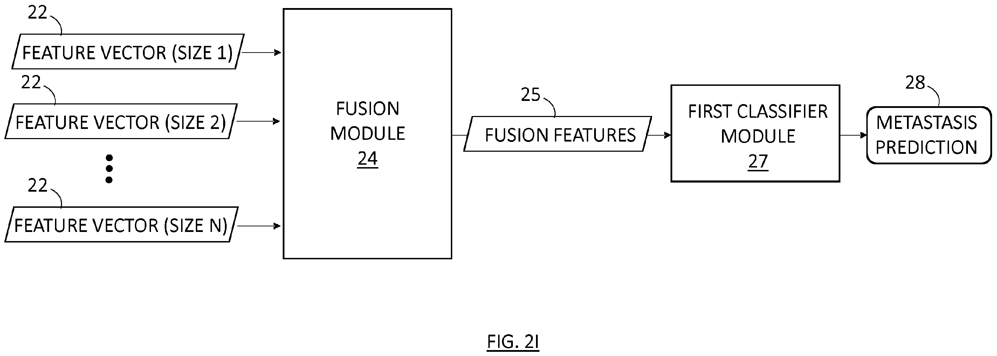

The method further comprises fusing 116 the feature vectors 22 of each dual-channel image 15 using a deep learning-based fusion module 24 to obtain fusion features 25 (**Figure 2I**) and predicting 118 the presence of extra-pancreatic organ metastasis in each dual-channel image using an automatic classification of the fusion features 25. As shown in Figure 2I, the fusion features 25 are fed to a first classifier module 27, the output of which is a metastasis prediction 28 (i.e. prediction of the presence -or absence- of extra-pancreatic organ metastasis) of the corresponding dual-channel image 15. The metastasis prediction 28 may be, for instance, a prediction score ranging from 0 (indicating the absence of metastasis in the dual-channel image 15) to 1 (indicating the presence of metastasis in the dual-channel image 15). Alternatively, the classification may be a binary classification (presence or absence of metastasis) by using Youden index (sensitivity + specificity - 1) in the internal test set. In an embodiment, the first classifier module 27 includes the Multi-layer Perceptron (MLP) classifier. Other different types of classifiers of the prior art may be used instead.

Finally, the presence of extra-pancreatic organ metastasis in the patient is predicted 120 using the metastasis prediction 28 of each dual-channel image 15. For each individual patient, the prediction of the presence/absence of metastasis may be determined based on the assessment of the proportion of extracted images classified as metastasis in step 118 (i.e. based on the metastasis predictions 28 of dual-channel images), wherein the cutoff value to determine presence or absence of metastasis in the patient may be determined using an internal validation dataset.

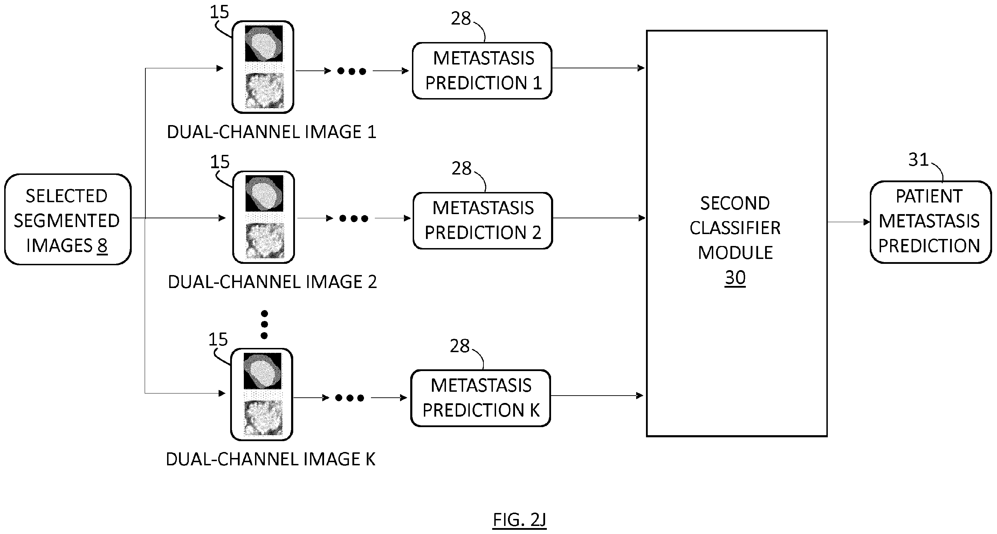

In an embodiment, a second classifier module 30 is used for the final prediction. **Figure 2J** represents a second classifier module 30 that receives as input the metastasis predictions 28 (metastasis prediction 1, metastasis prediction 2,..., metastasis prediction K) obtained for all the K dual-channel images 15 (dual-channel image 1, dual-channel image 1,..., dual-channel image K) that were obtained from the selected segmented images 8. Based on the proportion of metastasis predictions 28 obtained for the K dual-channel images 15, patients are classified, using for instance the second classifier module 30, as presence/absence of metastasis, thereby obtaining a patient metastasis prediction 31.

Similarly to the metastasis prediction 28, the patient metastasis prediction 31 may be a prediction score, e.g. ranging from 0 (indicating the absence of metastasis in the patient) to 1 (indicating the presence of metastasis in the patient), or a binary classification (presence or absence of metastasis in the patient). Using the second classifier module 30 depicted in **Figure 2J** is not necessarily required. Instead, one or more mathematical operations may be carried out, such as obtaining the arithmetic mean of all the metastasis predictions 28 and comparing the result with a threshold or obtaining an average score of all the metastasis predictions 28 and rounding the average to the nearest integer, 0 or 1.

Here in after, a detailed exemplary embodiment is explained. CE-CT images are received, the image size being 512×512 pixels and the slice thickness ranged between 0.5-8.0 mm. Each slice image undergoes automatic segmentation, delineating the pancreas and the tumor regions using nnUnet [10]. Optionally, a subsequent manual checking and correction using 3D slicer software may be further applied (e.g. by diagnostic radiologists or abdominal oncologists).

Preferably, the 128-slice CT examination is utilized due to its superior resolution when compared to the 64-slice CT scan. In order to standardize the slice thickness, double linear interpolation for images and nearest-neighbour interpolation for labels may be performed to achieve a uniform slice thickness of 2mm. To highlight the pancreas part in abdominal CT scans, window width (WW) and window level (WL) may be adjusted into 250 Hounsfield units (HU) and 75 HU, respectively. Subsequently, the labels may undergo erosion followed by dilation using a pixel volume kernel (e.g. a 3x3x3 pixel kernel) to eliminate speckles resulting from label noise. Furthermore, the boundaries of the pancreas and tumor segments are preferably expanded by adding 3x3x1 pixels to ensure preservation of margin features.

Given the substantial variability of tumor size along the Z-axis, smaller tumors may inadequately reflect the overall tumor characteristics, potentially leading to poor performance of CNN models. Therefore, slices deemed most representative, prioritizing those with the largest tumor area, are selected for model input. To that end, cross-section slices and their corresponding masks featuring the top four largest tumor areas are automatically identified to make the model's acquisition of comprehensive pixel intensity features pertaining to both the pancreas and the tumor. Furthermore, to enhance model performance and mitigate the influence of peripheral anatomical structures, the images and segmentation are cropped out of the tumor region using the pancreas bounding box. Additionally, data augmentation techniques are applied by implementing rotating geometric transformations around the tumor center (e.g. spanning angles from 0° to 360° with a step size of 60°), thereby generating 24 patches for each patient. Ultimately, the single-channel image and its corresponding mask (segmentation) are amalgamated into a new dual-channel image, serving as the model's input.

Prior to model training, the slices obtained from image preprocessing exhibited variable dimensions. To address this, they are standardized to a uniform size of 224x224 to align with the input requirements of the model. Then, the pixel intensity values of CT images are normalized to [0, 1], using the formulation $\frac{x-\mu}{\sigma}$, where $\mu$ denotes the average pixel value across train samples and $\sigma$ denotes the standard deviation value.

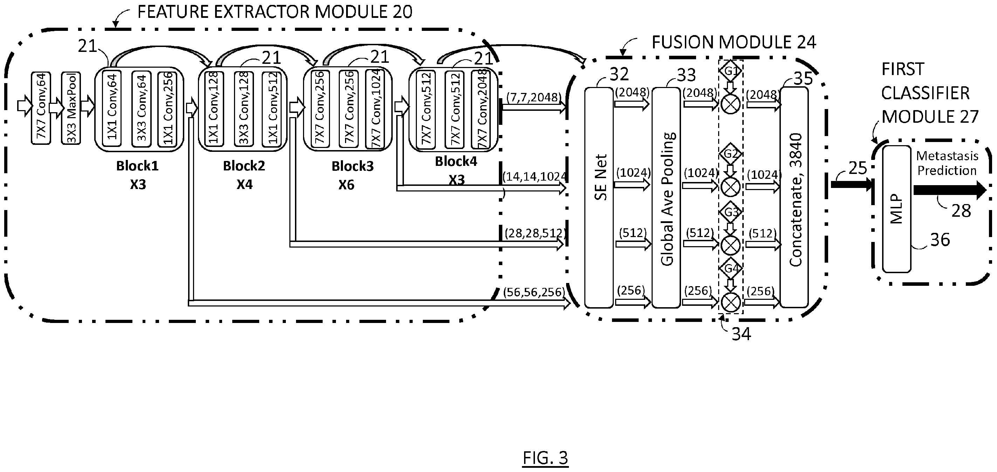

A fusion deep learning model integrates the different depth features derived from image and mask data. The input images of the deep learning model combine the 1-channel patch and its corresponding mask (segmentation) to create a new dual-channel slice image with dimensions of 224 × 224 × 2. Subsequently, the newly formed dual-channel patch images are inputted into the deep learning model, which comprises three modules: a feature extractor module 20, a fusion module 24 and a first classifier module 27. **Figure 3** depicts an embodiment of these three modules.

According to the embodiment of Figure 3, the feature extractor module 20 employs ResNet50 architecture [11], a state-of-the-art convolutional neural network 19, to extract features. This module generates 256 feature vectors of $56 \times 56$ from Block 1, 512 feature vectors of $28 \times 28$ from Block 2, 1024 feature vectors of $14 \times 14$ from Block 3, and 2048 feature vectors of $7 \times 7$ from Block 4, for each dual-channel image 15. These blocks correspond to the sets of convolutional layers 21 of convolutional neural network 19 in Figure 2H.

In fusion module 24, the outputs of the feature extractor module 20 undergo processing via the Squeeze-and-Excitation Networks (SE Net) 32 [12]. This step enhances the salient characteristics of important channels while attenuating those of non-essential channels. Subsequently, a global average pooling function 33 is applied to generate diverse depth features. A gating mechanism 34 is incorporated to modulate the significance of the four blocks (Block 1, Block 2, Block 3, Block 4). Finally, all features are concatenated using a concatenate function 35, yielding a total of 3840 features ($256 + 512 + 1024 + 2048$) for each patch. Therefore, 24 (patches) $\times$ 3840 (features) are obtained for each patient. The mathematical formulations are provided below:

$$f_{Blockq} : \begin{cases} GlobalAvePooling(SE(x_1^a)) \rightarrow W_q^1 \\ GlobalAvePooling(SE(x_2^a)) \rightarrow W_q^2 \\ \vdots \\ GlobalAvePooling(SE(x_o^a)) \rightarrow W_q^o \end{cases} \qquad (1)$$

Let $x^a \in \mathbb{R}^{i \times j}$ , where $\mathbb{R}^{i \times j}$ represents an i×j feature vector extracted by ResNet50, the element $f_{Blockq} = (W_q^1, W_q^2, \cdots, W_q^3)$ represent the features from each block, where q $\in$ {1,2,3,4} donates the different block numbers, and o $\in$ {256,512,1024,2048} donates the number of features extracted from each block.

In the following formulation, $X_f$ represents fusion features 25. $G_1, G_2, G_3, G_4 \in \mathbb{R}$ are trainable parameters and serve as the gating mechanism 34 controlling the priority of each block automatically:

$$X_f = G_1 * f_{Block1} \oplus G_2 * f_{Block2} \oplus G_3 * f_{Block3} \oplus G_4 * f_{Block4}, X_f$$
$$\in \mathbb{R}^{black_{1+2+3+4}} \qquad (2)$$

In an embodiment, the first classifier module 27 comprises a multi-layer Perceptron (MLP) 36 comprising four fully connected layers with neuron counts of 1920, 960, 480, and 2, respectively, accompanied by ReLU activation functions. The input to the fully connected layers is subjected to dropout regularization with a rate of 0.5 to mitigate overfitting. The resulting prediction scores, ranging from 0 (indicating the absence of metastasis) to 1 (indicating the presence of metastasis), are generated through the Softmax activation function.

During the training phase of the deep learning model, a 5-fold cross-validation strategy based on the presence/absence of tumor metastasis percentages was implemented to impartially assess model performance. For each fold, consistent hyperparameters were utilized: the batch size was 48, the number of epochs was 150, the learning rate was 0.0005, the loss function was cross-entropy, and the Adam algorithm was selected as the optimizer. The validation and testing processes followed the same procedure, employing a test dataset. The deep learning model was developed using Tensorflow in Python, and training efficiency was enhanced by utilizing a GPU (NVIDIA GeForce RTX 3080).

After model training, a model assessment on the test dataset was performed by computing the accuracy, sensitivity, specificity, area under the Precision Recall Curve (AUPRC), f1-score and area under the receiver operating characteristic curve (AUROC). At the slice-level (i.e. metastasis prediction 28 of dual-channel images), the prediction probability for the presence of metastasis was obtained from the output of the model. Youden index (sensitivity + specificity - 1), to set up the best threshold in AUROC, was used to dichotomize the probability to classify the presence of metastasis in the test dataset. Similarly, at the patient-level (i.e. patient metastasis prediction 31), based on the proportion of predictive slice metastasis, patients were classified as presence/absence of metastases by using the threshold that maximizes the Youden index on the test dataset.

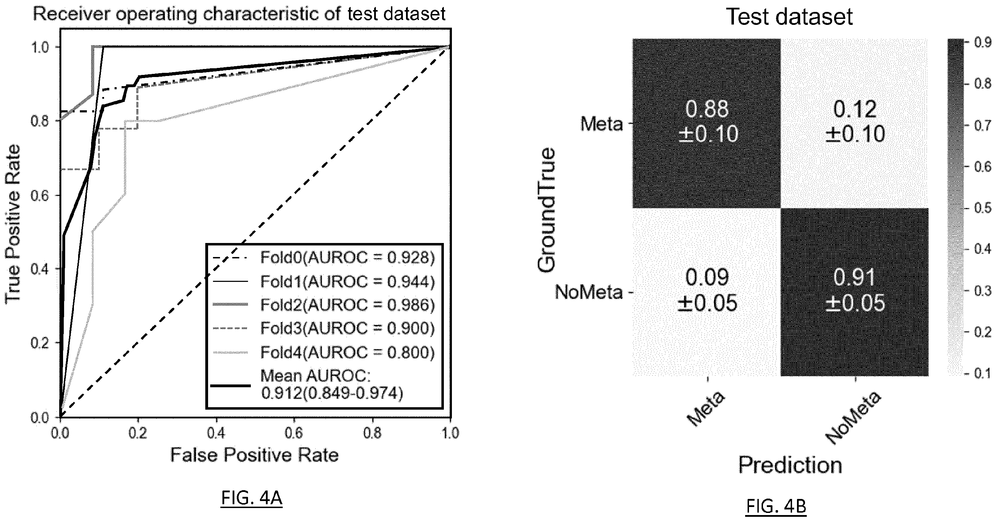

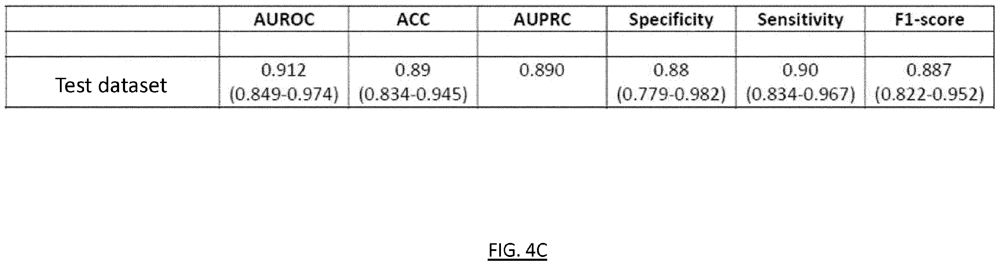

**Figures 4A-4C** show the performance of the method for binary classification of presence/absence of metastases at patient-level for the test dataset. Upon 5-fold cross validation, the AUROC for predicting the metastasis status at the patient-level for the test dataset was 0.912 (Figure 4A). The confusion matrix resulting from this test dataset is shown in Figure 4B. The table depicted in Figure 4C shows the AUROC, accuracy, AUPRC (area under the Precision Recall Curve), specificity, sensitivity and f1-score. 95% confidence intervals are shown in brackets. The method was also validated with other different test datasets, yielding an accurate (AUC>0.80) prediction of the presence of organ metastases.

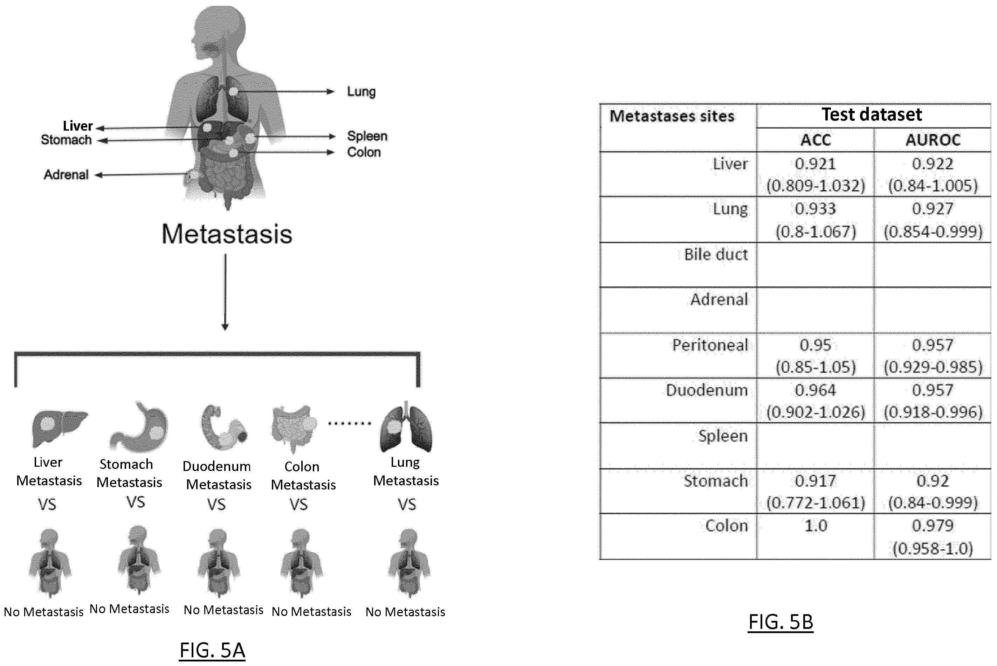

The performance of the method was also evaluated based on the different metastatic sites using the test dataset, to ascertain whether its efficacy remained consistent across various metastatic sites (**Figure 5A**). The table of **Figure 5B** shows the performance of at patient-level. Notably, for liver metastasis the method exhibited high performance, with mean AUROC=0.922 (95%CI: 0.84-1.005) in the test dataset. Lung metastasis represents a significant site of concern in clinics, particularly because it cannot be detected by a single abdominal CT image. The method also exhibited high performance in detecting lung metastasis, with mean AUROC=0.927 (95%CI: 0.854-0.999) in the test dataset. Similar robust performance was observed for the other metastatic sites, with an accuracy and AUROC greater than 0.91 and 0.92, respectively.

Compared with previously reported deep-learning approaches for medical images, the invention has several unique characteristics. First, the invention presents a novel feature fusion method for PDAC patients by combining feature vectors from a plurality of blocks based on the ResNet50 architecture to get holistic image information. To further boost the model's power for high-quality feature utilization, Squeeze-and-Excitation Networks (SE Net) [13] were used to calculate the importance of each feature, and learnable gating mechanism parameters were also added to control influence of the learned blocks on the final at the same time. Second, to enable focusing on pancreas areas, images were cropped into square subregions based on their mask, and then combined standardized pancreas and tumor masks into a dual-channel image as the input of the model. This mask-guided attention technology highlights the pancreas and tumor areas in the convolutional training process. Third, as the peritumoral region plays an essential role in identifying lymph node metastasis in several cancer types, the peritumoral region was embraced by adding $3\times3\times1$ pixels to expand the borders of pancreas and tumor to avoid the loss of margin information.

Although CE-CT images have greatly helped in detecting the presence/absence of PDAC organ metastases, it faces drawbacks that that are difficult to address. The most prominent caveat is that a single abdominal CE-CT image is not sufficient to identify patients with distant metastasis outside the abdomen. In these situations, the proposed model could serve as a supplementary tool for radiologists to indicate the presence of PDAC metastasis. In addition to its diagnostic capabilities, the present invention could also bring benefits for clinical ancillary test reduction, by decreasing the time and resources required to confirm the diagnosis. This is particularly important in resource-limited settings were advanced medical imaging techniques, such as positron emission tomography-computed tomography (PET-CT), may not be readily available. Furthermore, the invention has the potential to promote clinicians to re-assess or pick up alternative symptoms associated with metastasis that were previously overlooked when the model produces high-confidence metastatic predictions that are inconsistent with the clinicians' assessment. Additionally, the invention could be a tool for guiding patient staging and therapeutic option decisions by providing clinicians with more accurate information about the presence and extent of metastases.

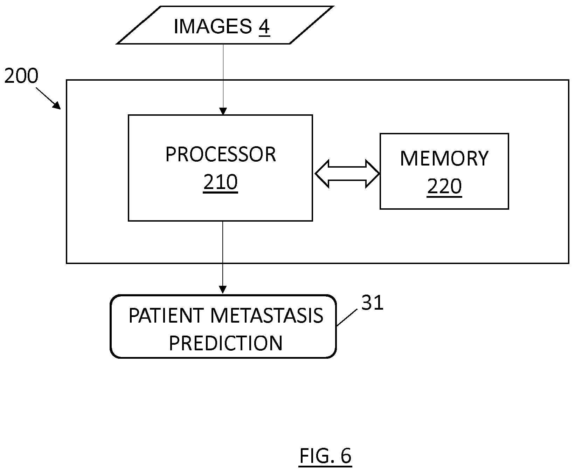

**Figure 6** depicts an exemplary embodiment of a system for detecting pancreatic cancer metastasis. The system comprises a data processing unit 200 including a processor 210 and a memory 220 coupled with the processor 210 and storing a set of instructions which causes the processor to perform the steps of the method 100. The processor 210 is configured to access the instructions stored in the memory 220 and execute them, obtaining a patient metastasis prediction 31 from a plurality of images 4 of an abdominal CT scan 14 of the patient 1 that are received by the data processing unit 200. The data processing unit 200 may include, for instance, one or more CPUs, one or more GPUs, or a combination thereof.

## Claims

1. A method of detecting pancreatic cancer metastasis, comprising:

  - receiving (102) a plurality of images (4) of an abdominal CT scan (14) of a patient (1), wherein each image (4) includes at least a region of a pancreas (2) and a region of a pancreatic tumor (3);
  - obtaining (104), from each image (4) received, a segmented image (5) that includes a segmented pancreas (6) and a segmented pancreatic tumor (7);
  - selecting (106) at least one segmented image (8) based on the area of the segmented pancreatic tumor (7);
  - cropping (108) each selected segmented image (8);
  - obtaining (110), from each cropped segmented image (9), at least one rotated segmented image (12);
  - for each rotated segmented image (12), composing (112) a dual-channel image (15) that includes the rotated segmented image (12) and its corresponding non-segmented image (16);
  - extracting (114) from each dual-channel image (15) a plurality of feature vectors (22) of different sizes using a feature extractor module (20);
  - fusing (116) the feature vectors (22) of each dual-channel image (15) using a deep learning-based fusion module (24) to obtain fusion features (25);
  - predicting (118) the presence of extra-pancreatic organ metastasis in each dual-channel image (15) using an automatic classification of the fusion features (25); and
  - predicting (120) the presence of extra-pancreatic organ metastasis in the patient (1) using the metastasis prediction (28) of each dual-channel image (15).

2. The method of claim 1, wherein selecting (106) at least one segmented image (8) comprises selecting a plurality of segmented images (8a,8b,8c,8d) having the largest area ($A_1$, $A_2$, $A_3$, $A_4$) of segmented pancreatic tumor (7).

3. The method of any preceding claims, wherein each selected segmented image (8) is cropped (108) around a bounding box of the segmented pancreas (6).

4. The method of any preceding claims, wherein the at least one rotated segmented image (12) is obtained (110) by rotating the corresponding cropped segmented image (9) around the geometric center (11) of the segmented pancreatic tumor (7).

5. The method of any preceding claims, wherein extracting (114) the feature vectors (22) is performed by a convolutional neural network (19) including a plurality of sets of convolutional layers (21) that extract the feature vectors (22) with different sizes.

6. The method of claim 5, wherein the convolutional neural network (19) is a ResNet50.

7. The method of any preceding claims, wherein fusing (116) the feature vectors (22) includes:

   processing the feature vectors (22) via Squeeze-and-Excitation Networks (32);
   applying a global average pooling function (33);
   modulating the influence of each feature vector (22) via a gating mechanism (34); and
   concatenating the resulting features.

8. The method of any preceding claims, wherein the automatic classification of the fusion features (25) is performed by a first classifier module (27) based on a previously trained artificial neural network.

9. The method of claim 8, wherein the classifier module (27) includes a multi-layer perceptron (36) classifier.

10. The method of any preceding claims, wherein the abdominal CT scan (14) is a portal venous phase CE-CT scan.

11. The method of any preceding claims, wherein the pancreatic tumor (3) is a pancreatic ductal adenocarcinoma.

12. The method of any preceding claims, further comprising expanding the edges of the segmented pancreas (6) and the segmented pancreatic tumor (7) by dilation using a pixel volume kernel.

13. A system for detecting pancreatic cancer metastasis, the system comprising a processor (210) and a memory (220) coupled with and readable by the processor (210) and storing a set of instructions which, when executed by the processor (210), causes the processor to perform the method (100) of any of claims 1 to 12.

14. A computer program product for detecting pancreatic cancer metastasis, comprising computer code instructions that, when executed by a processor (210), causes the processor to perform the method (100) of any of claims 1 to 12.

15. The computer program product of claim 14, comprising at least one computer-readable storage medium having recorded thereon the computer code instructions.

IMAGES
4

RECEIVE IMAGES OF ABDOMINAL CT SCAN INCLUDING PANCREAS AND PANCREATIC TUMOR REGIONS — 102

100

OBTAIN SEGMENTED IMAGES WITH SEGMENTED PANCREAS AND SEGMENTED PANCREATIC TUMOR — 104 ⟹ SEGMENTED IMAGES — 5

106 — SELECT SEGMENTED IMAGES BASED ON PANCREATIC TUMOR AREA ⟹ SELECTED SEGMENTED IMAGES — 8

108 — CROP SELECTED SEGMENTED IMAGES ⟹ CROPPED SEGMENTED IMAGES — 9

110 — OBTAIN ROTATED SEGMENTED IMAGES ⟹ ROTATED SEGMENTED IMAGES — 12

112 — COMPOSING DUAL-CHANNEL IMAGES WITH ROTATED SEGMENTED IMAGES AND THE CORRESPONDING NON-SEGMENTED IMAGES ⟹ DUAL-CHANNEL IMAGES — 15

114 — EXTRACT FEATURE VECTORS OF DIFFERENT SIZES USING A FEATURE EXTRACTOR MODULE ⟹ FEATURE VECTORS — 22

116 — FUSE FEATURE VECTORS USING A DEEP LEARNING-BASED FUSION MODEL ⟹ FUSION FEATURES — 25

118 — PREDICT EXTRA-PANCREATIC ORGAN METASTASES IN EACH DUAL-CHANNEL IMAGE BY CLASSIFYING THE FUSION FEATURES ⟹ METASTASIS PREDICTIONS OF DUAL-CHANNEL IMAGES — 28

120 — PREDICT EXTRA-PANCREATIC ORGAN METASTASES IN THE PATIENT USING THE PREDICTION OF EACH DUAL-CHANNEL IMAGE ⟹ PATIENT METASTASIS PREDICTION — 31

FIG. 1

EP 4 787 337 A1

FIG. 2A

FIG. 2B

FIG. 2C

FIG. 2E

FIG. 2D

FIG. 2F

FIG. 2G

EP 4 787 337 A1

FIG. 2H

FIG. 2I

FIG. 2J

EP 4 787 337 A1

FIG. 3

Receiver operating characteristic of test dataset

Fold0(AUROC = 0.928)
Fold1(AUROC = 0.944)
Fold2(AUROC = 0.986)
Fold3(AUROC = 0.900)
Fold4(AUROC = 0.800)
Mean AUROC:
0.912(0.849-0.974)

FIG. 4A

Test dataset

FIG. 4B

| | AUROC | ACC | AUPRC | Specificity | Sensitivity | F1-score |
|---|---|---|---|---|---|---|
| | | | | | | |
| Test dataset | 0.912 (0.849-0.974) | 0.89 (0.834-0.945) | 0.890 | 0.88 (0.779-0.982) | 0.90 (0.834-0.967) | 0.887 (0.822-0.952) |

<u>FIG. 4C</u>

Metastasis

Liver Metastasis VS No Metastasis — Stomach Metastasis VS No Metastasis — Duodenum Metastasis VS No Metastasis — Colon Metastasis VS No Metastasis — ........ — Lung Metastasis VS No Metastasis

FIG. 5A

| Metastases sites | Test dataset | |
|---|---|---|
| | ACC | AUROC |
| Liver | 0.921 (0.809-1.032) | 0.922 (0.84-1.005) |
| Lung | 0.933 (0.8-1.067) | 0.927 (0.854-0.999) |
| Bile duct | | |
| Adrenal | | |
| Peritoneal | 0.95 (0.85-1.05) | 0.957 (0.929-0.985) |
| Duodenum | 0.964 (0.902-1.026) | 0.957 (0.918-0.996) |
| Spleen | | |
| Stomach | 0.917 (0.772-1.061) | 0.92 (0.84-0.999) |
| Colon | 1.0 | 0.979 (0.958-1.0) |

FIG. 5B

FIG. 6

EUROPEAN SEARCH REPORT

Application Number

EP 25 38 2064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AL HASAN MD MAHFUZ ET AL: "Automated Segmentation of Lymph Nodes on Neck CT Scans Using Deep Learning", JOURNAL OF IMAGING INFORMATICS IN MEDICINE, SPRINGER INTERNATIONAL PUBLISHING, CHAM, vol. 37, no. 6, 27 June 2024 (2024-06-27), pages 2955-2966, XP037985495, DOI: 10.1007/S10278-024-01114-W [retrieved on 2024-06-27] * page 2965, column 1, paragraph 1 - page 2964, column 2, last paragraph; figures 1-6 * ----- | 1-15 | INV. G06V10/82 G06T7/00 |
| A | US 2020/245960 A1 (RICHTER JENS FILIP ANDREAS [SE] ET AL) 6 August 2020 (2020-08-06) * paragraph [0207]; figure 4 * ----- | 1-15 | |

TECHNICAL FIELDS SEARCHED (IPC)

G06V
G06T

The present search report has been drawn up for all claims

| Place of search | Date of completion of the search | Examiner |
|---|---|---|
| The Hague | 9 May 2025 | Thibault, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 38 2064

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| US 2020245960 A1 | 06-08-2020 | AU 2020206584 A1 | 17-06-2021 |
| | | CA 3122540 A1 | 16-07-2020 |
| | | CN 113272859 A | 17-08-2021 |
| | | EP 3909014 A1 | 17-11-2021 |
| | | JP 7568628 B2 | 16-10-2024 |
| | | JP 2022516316 A | 25-02-2022 |
| | | JP 2024079801 A | 11-06-2024 |
| | | TW 202040518 A | 01-11-2020 |
| | | US 12243236 B1 | 04-03-2025 |
| | | US 2020245960 A1 | 06-08-2020 |
| | | US 2023316530 A1 | 05-10-2023 |
| | | US 2024169546 A1 | 23-05-2024 |
| | | US 2025069232 A1 | 27-02-2025 |
| | | WO 2020144134 A1 | 16-07-2020 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AN, C. et al.** Deep learning radiomics of dual-energy computed tomography for predicting lymph node metastases of pancreatic ductal adenocarcinoma. *Eur J Nucl Med Mol Imaging*, 2022, vol. 49, 1187-1199
- **BIAN, Y. et al.** Artificial Intelligence to Predict Lymph Node Metastasis at CT in Pancreatic Ductal Adenocarcinoma. *Radiology*, 2023, vol. 306, 160-169
- **FU, N. et al.** A deep-learning radiomics-based lymph node metastasis predictive model for pancreatic cancer: a diagnostic study. *Int J Surg*, 2023, vol. 109, 2196-2203
- **CHEN, X.** ; **WANG, W.** ; **JIANG, Y.** ; **QIAN, X**. A dual-transformation with contrastive learning framework for lymph node metastasis prediction in pancreatic cancer. *Med Image Anal*, 2023, vol. 85, 102753
- **ZHAO, B. et al.** Development of a radiomics-based model to predict occult liver metastases of pancreatic ductal adenocarcinoma: a multicenter study. *Int J Surg*, 2024, vol. 110, 740-749
- **ZAMBIRINIS, C.P. et al.** Recurrence After Resection of Pancreatic Cancer: Can Radiomics Predict Patients at Greatest Risk of Liver Metastasis?. *Annals of surgical oncology*, 2022, vol. 29, 4962-4974
- **LIANG, X. et al.** A radiomics model that predicts lymph node status in pancreatic cancer to guide clinical decision making: A retrospective study.. *J Cancer*, 2021, vol. 12, 6050-6057

- **LI, K. et al.** Contrast-enhanced CT radiomics for predicting lymph node metastasis in pancreatic ductal adenocarcinoma: a pilot study. *Cancer Imaging*, 2020, vol. 20, 12
- **BIAN, Y. et al.** Radiomics nomogram for the preoperative prediction of lymph node metastasis in pancreatic ductal adenocarcinoma. *Cancer Imaging*, 2022, vol. 22, 4
- **ISENSEE, F.** ; **JAEGER, P.F.** ; **KOHL, S.A.A.** ; **PETERSEN, J.** ; **MAIER-HEIN, K.H.** nnU-Net: a self-configuring method for deep learning-based biomedical image segmentation.. *Nat Methods*, 2021, vol. 18, 203-211
- **HE, K.** ; **ZHANG, X.** ; **REN, S.** ; **SUN, J.** Deep Residual Learning for Image Recognition. *2016 IEEE Conference on Computer Vision and Pattern Recognition (CVPR)*, 2015, 770-778
- **LIU, K.** ; **LU, N.** ; **WU, F.** ; **ZHANG, R.** ; **GAO, F**. Model Fusion and Multiscale Feature Learning for Fault Diagnosis of Industrial Processes.. *IEEE transactions on cybernetics Pp*, 2022
- **LIU, B.** ; **CHEN, C.H.** ; **ZHENG, P.** ; **ZHANG, G**. An Adaptive Parallel Feature Learning and Hybrid Feature Fusion-Based Deep Learning Approach for Machining Condition Monitoring.. *IEEE transactions on cybernetics Pp*, 2022